Europäisches Patentamt

European Patent Office

Office européen des brevets

(19)

(11) Numéro de publication : **0 032 866**
**B1**

(12) **FASCICULE DE BREVET EUROPÉEN**

(45) Date de publication du fascicule du brevet :
13.06.84

(21) Numéro de dépôt : **81400075.8**

(22) Date de dépôt : **21.01.81**

(51) Int. Cl.³ : **B 65 G 49/06**, B 65 G 1/02,
B 65 D 85/48, B 66 C 1/16

(54) **Procédé et dispositif pour le transport et le magasinage de piles de feuilles de verre.**

(30) Priorité : **21.01.80 DE 3002021**

(43) Date de publication de la demande :
**29.07.81 Bulletin 81/30**

(45) Mention de la délivrance du brevet :
**13.06.84 Bulletin 84/24**

(84) Etats contractants désignés :
**BE DE FR GB IT LU NL SE**

(56) Documents cités :
**DE-A- 2 758 263**
**DE-C- 2 234 124**
**DE-C- 2 248 939**
**DE-U- 7 719 134**
**FR-A- 1 176 630**
**FR-A- 1 242 743**
**FR-A- 1 405 317**
**FR-A- 2 127 321**
**FR-A- 2 301 459**
**US-A- 3 253 852**

(73) Titulaire : **SAINT-GOBAIN VITRAGE**
**Les Miroirs 18, avenue d'Alsace**
**F-92400 Courbevoie (FR)**
**BE FR GB IT LU NL SE**
**VEGLA Vereinigte Glaswerke GmbH**
**Viktoria Allee 3-5**
**D-5100 Aachen (DE)**
**DE**

(72) Inventeur : **Overath, Andreas Albrecht**
**Aachernerstrasse 141**
**D-5102 Würselen (DE)**
Inventeur : **Roeben, Alfred**
**Aachernerstrasse 287**
**D-5112 Baesweiler (DE)**
Inventeur : **Tings, Willi**
**Brühlstrasse 26**
**D-5100 Aachen (DE)**
Inventeur : **Wissgens, Hans**
**Stettinerstrasse 49**
**D-5100 Aachen (DE)**

(74) Mandataire : **Eudes, Marcel et al**
**Saint-Gobain Recherche 39 Quai Lucien Lefranc**
**F-93304 Aubervilliers Cedex (FR)**

## Description

L'invention a pour objet la manutention et, spécialement, la manutention interne et le magasinage de piles de feuilles de verre, en particulier des feuilles très minces et de très grandes dimensions couramment dénommées « grands carreaux ».

Il est connu de stocker et de transporter des feuilles de verre en piles qui trouvent un appui direct sur des pupitres à un ou deux versants. Pour déplacer ces pupitres en les élinguant sans risquer qu'ils basculent même s'ils ne sont pas complètement chargés, il est d'ailleurs connu par le brevet US-A-3 253 852 de les saisir à la fois à leur partie haute et à leur partie basse, à l'aide de manilles en forme de T inversé dont le bras horizontal présente un crochet supérieur et porte à l'opposé des tirants articulés réglables qui s'accrochent à la partie inférieure du pupitre, l'ensemble se décrochant lorsqu'on abaisse son point de suspension et que le pupitre reprend contact avec le sol.

Il était également connu de déposer de telles feuilles sur un élément de support en L, en une pile sur laquelle on assemblait ensuite un couvercle ou élément de fermeture en L inversé pour l'enfermer dans le cadre ainsi constitué. Ces cadres, dont chaque élément est muni d'oreilles aptes à recevoir les crochets ou les câbles d'un engin de levage ce qui permet de la transporter suspendus, peuvent se stocker verticalement ou en appui sur des pupitres (FR-A-1 405 317).

Cette manière de faire est relativement coûteuse, car elle exige un nombre important de cadres complets ; d'autre part, les piles de grands carreaux prennent une place importante en magasin, puisque chacune est entourée sur ses deux faces par un cadre qui occupe nécessairement une partie de l'aire de magasinage : on préfère donc déposer toute une série de piles, nues, en appui successif sur un même pupitre par l'intermédiaire d'entretoises.

Dans ce but et pour leur manutention interne, on enferme les piles, dont les grands carreaux, sur les lignes actuelles de fabrication de verre plat, possèdent des dimensions de plus de 6 m × 3 m et qui atteignent un poids de 10 à 12 tonnes, dans des cadres porteurs en L, équipés de ceintures de serrage, tels que ceux décrits par le brevet DE-C3-2 234 124, ou de mâchoires latérales, comme ceux du brevet DE-C3-2 248 939.

Toutefois, lorsqu'il s'agit de feuilles très minces, d'une épaisseur de l'ordre de 2 mm et moins, la grande déformabilité de chacune d'elles et de l'ensemble de la pile qu'elles forment crée des difficultés qui exigent des méthodes de transport et de stockage spéciales.

Or, les grands carreaux cités sont élaborés dès aujourd'hui sous des épaisseurs de 1,5 mm et moins. Dans ce cas, et revenant à la solution antérieure, il est connu de les emmagasiner en position verticale, isolément (DE-A1-2 758 263) ou sur un ratelier (DE-U-7 719 134), après les avoir enfermés dès leur empilage à l'extrémité de la ligne de fabrication dans un cadre constitué par assemblage d'un support rigide en L et d'un couvercle également rigide en L. Pour les transporter, par exemple pour sortir une pile du magasin, l'engin de levage, grue ou palan, n'a qu'à saisir le cadre.

L'invention a pour objet de créer un mode opératoire qui permette même le transport et le stockage de grands carreaux très minces, en particulier d'une épaisseur inférieure à 2 mm, en conservant tous les avantages des solutions précédentes, mais pour un coût moins élevé et un moindre encombrement sur le parc, ainsi que des dispositifs appropriés à sa mise en œuvre.

Selon l'invention telle qu'exposée principalement dans les revendications 1 et 3, le cadre fermé sert exclusivement au transport, l'organe de levage s'accrochant exclusivement au couvercle, qui joue en quelque sorte le rôle d'une manille de levage et sera séparé du support une fois la charge déposée sur l'aire de magasinage en position légèrement inclinée, appuyée sur un pupitre par l'intermédiaire éventuel de supports précédents.

Le couvercle peut ainsi être réutilisé pour la manutention d'une autre pile de feuilles de verre. Par conséquent, le support, suspendu par l'intermédiaire du couvercle puis déposé avec la pile, l'accompagne et la supporte aussi pendant le magasinage, mais le couvercle combine deux fonctions connues, ne jouant son rôle d'appui et de support que pendant le transport proprement dit ou les stockages intermédiaires et non pendant le stockage des piles en magasin, où il n'est pas nécessaire d'étayer la feuille externe, en raison de leur position légèrement inclinée : contrairement à ce qui se passait auparavant, un seul et même couvercle peut être utilisé avec un grand nombre de supports et de piles de grands carreaux, ce qui diminue de moitié les investissements nécessaires au transport et au magasinage.

Un cadre de transport propre à la mise en œuvre de l'invention est donc lui-même constitué d'un support en L et d'un couvercle en L inversé, que l'on peut assembler en un cadre fermé. Mais le couvercle, seul muni d'une ou plusieurs oreilles de levage, est porteur de l'ensemble des organes mobiles du dispositif qui permet de l'assembler sur le support ; ce dispositif, à la partie inférieure, se verrouille directement par l'intermédiaire d'une poignée, mais, en raison de la grande hauteur du cadre, sa partie supérieure est constituée d'organes de prise commandés du sol par l'intermédiaire d'une transmission qui peut se réduire à une tige de commande ou encore comprendre un dispositif hydraulique faisant monter ou descendre les pièces d'assemblage mobiles.

La suite de la description, relative à un exemple préféré de mise en œuvre de tels cadres de transport fera apparaître des développements avantageux de l'invention, qui se trouve définie de façon précise par les revendications.

Les dessins montrent :

figure 1, une vue perspective d'un cadre en deux parties selon l'invention,

figure 2, un détail avec coupe partielle du mécanisme de verrouillage placé à la partie inférieure des deux éléments du cadre,

figure 3, la mise en place des deux éléments, avant pose du couvercle sur le support,

figure 4, une vue latérale du cadre de transport constitué des deux éléments assemblés et porteur d'une pile de feuilles de verre,

figure 5, une aire de magasinage chargée de cadres conformes à l'invention,

figure 6, un détail du socle représenté sur la figure 5.

Le cadre est constitué d'un support 1 et d'un couvercle 2. Le support 1 comprend des montants verticaux 3 à la partie inférieure desquels sont placées à angle droit des sections de profilés 4, qui en constituent la base : les montants verticaux 3 sont réunis en un cadre rigide par des longerons horizontaux 5 et des traverses diagonales 7 pour former la face d'appui des feuilles de verre.

Comme les profilés 3, 5 et 7 qui forment cette surface d'appui, les talons formés par les sections de profilés horizontales 4 sont couverts de semelles élastiques 8.

A la sortie de la ligne de fabrication, on découpe le ruban continu en grands carreaux d'une longueur de l'ordre de 6 m et d'une largeur supérieure à 3 m, que l'on rassemble sur le support 1 pour constituer une pile d'un poids de 10 à 12,5 tonnes, en les posant un par un, de chant, sur les talons 4, pour les appuyer successivement sur la face d'appui du cadre puis sur les précédents.

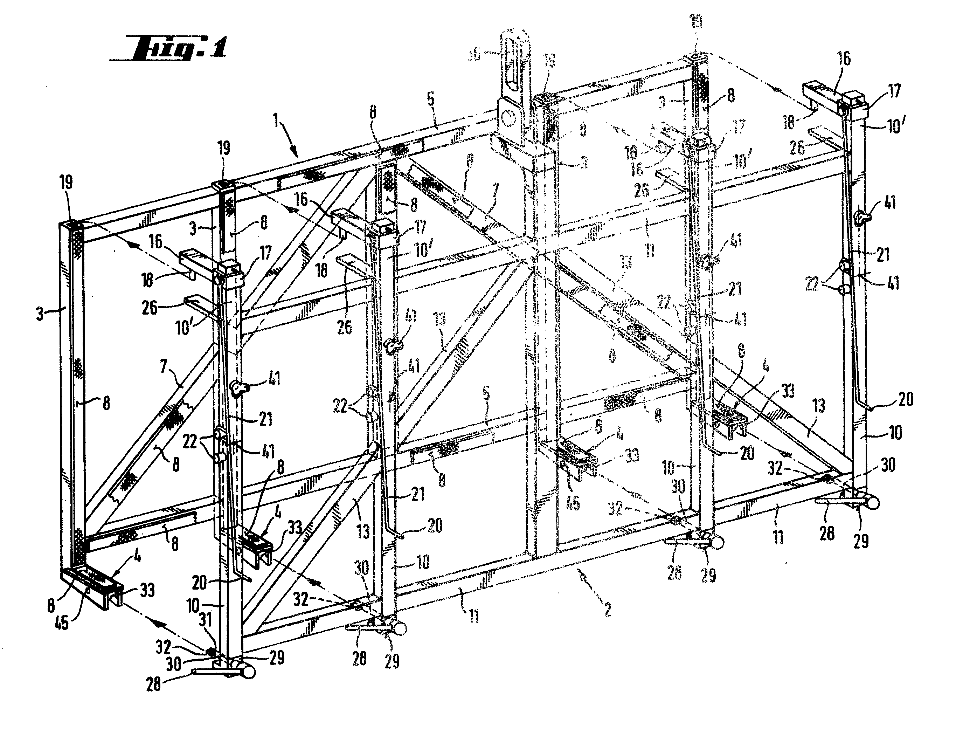

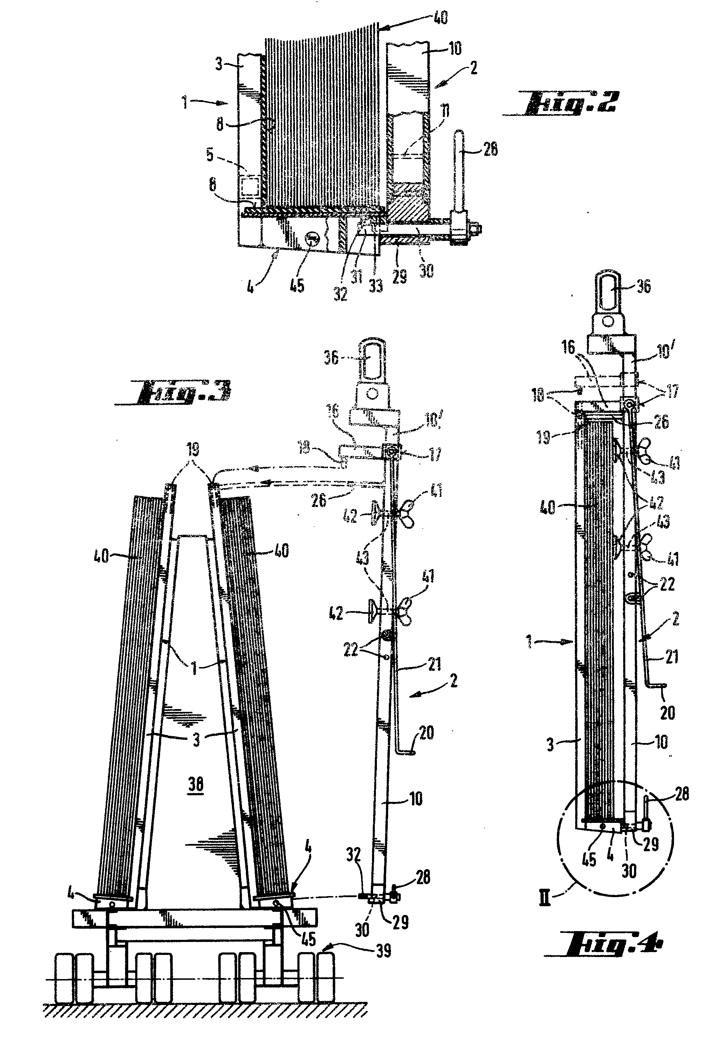

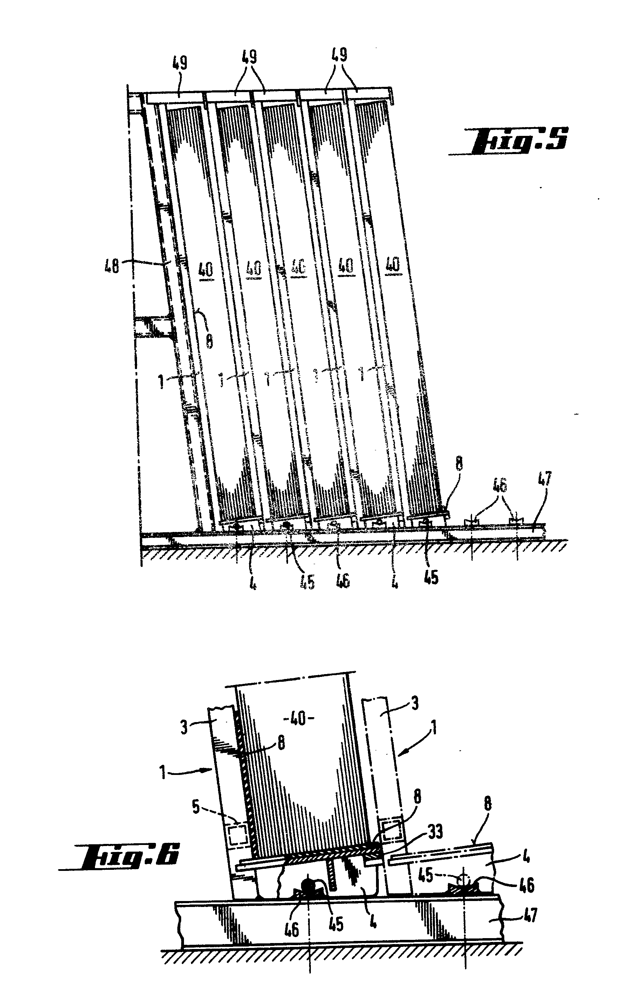

Le support 1 lui-même est placé sur un pupitre approprié, avec une légère inclinaison de 5 à 6° par rapport à la verticale, comme le montre la figure 3.

Le couvercle 2 comprend les poutrelles verticales 10, les poutrelles horizontales 11 et les traverses diagonales 13.

Les poutrelles verticales 10 dépassent au-dessus de la dernière des poutrelles horizontales 11, et leur partie supérieure 10' porte des équerres 16 montées sur un collier 17 et dirigées perpendiculairement au plan principal du couvercle 2 ; ces équerres, qui viennent surplomber le support 1, présentent à leur extrémité une cheville 18 dirigée vers le bas et destinée, lors de la fermeture, à pénétrer dans un évidement 19 des montants verticaux de celui-ci.

Grâce à une poignée 20 placée à son extrémité, une tige 21 permet de faire coulisser chaque équerre 16. Elle porte une oreille capable de s'emboîter sur des ergots 22 pour l'immobiliser et maintenir ainsi les équerres 16 dans la position de verrouillage désirée.

Sur les poutrelles verticales 10 du couvercle et sous les équerres 16 font aussi saillie, perpendiculairement, des entretoises 26 ; lors de la fermeture du cadre, elles viennent s'appuyer sur les montants verticaux 3 et maintiennent le couvercle écarté, dans une position telle qu'il est facile d'introduire les chevilles 18 dans les trous 19.

A la partie inférieure, la liaison du couvercle 2 sur l'élément de support 1 se fait à l'aide de verrous commandés par des poignées 28, comme la figure 2 le montre de façon détaillée : plusieurs poutrelles verticales 10 débordent vers le bas au-delà de la dernière des poutrelles horizontales 11 ; leur partie débordante 29 porte un axe 30 commandé par la poignée 28 et dont l'extrémité 31 munie d'un doigt de verrouillage 32 peut pénétrer à l'intérieur d'un talon 4, pour se verrouiller derrière sa plaque frontale 33, et bloquer ainsi le couvercle 2 sur le support 1.

Le couvercle 2 est porteur d'une oreille de levage 36 qui permet de le suspendre au crochet d'une grue, le point d'attache étant tel que le cadre chargé d'une pile de carreaux de verre ne présente sur la verticale qu'une inclinaison très faible, de l'ordre de 2°, ce qui facilite le processus de pose.

Lors de la constitution d'une pile de carreaux à l'extrémité d'une ligne de fabrication, les feuilles de verre sont posées comme le montre la figure 3, sur un support 1 placé par exemple sur un pupitre convenable 38, susceptible d'être monté lui-même sur une plateforme 39. Une fois que le nombre de feuilles voulu est rassemblé en une pile 40 puisque celle-ci, le cas échéant, a été transportée à un autre endroit, par exemple dans le magasin, à l'aide de la plateforme 39, on apporte et on pose le couvercle 2 à l'aide d'une grue, pour fermer le cadre puis on le fixe à l'aide de verrous commandés par des poignées 28. La grue le dépose ensuite contre la partie supérieure du support 1, après quoi on peut effectuer l'assemblage à la partie supérieure à l'aide des tiges 21 et de leur poignée 20. Puis, en tournant les poignées 41, on applique sur la face de la pile de grands carreaux, qui se trouve ainsi immobilisée à l'intérieur du cadre, les semelles 42 des vérins à vis 43, montés sur les poutrelles 10 de l'élément de fermeture dans des passages filetés convenables.

Pour stocker les piles 40, on les pose avec leur cadre de transport sur des pupitres fixes, ceci avec une légère inclinaison, comme le montre la figure 5. Un pupitre approprié est décrit par exemple dans la publication de brevet DE-A-22 45133.

Après avoir posé la pile de feuilles de verre avec son cadre, on sépare le couvercle 2 du support 1 en agissant sur les poignées 28 puis en dégageant les tiges 21 des ergots 22, tandis que le support 1 lui-même me reste en place sur son aire de magasinage avec la pile 40.

Comme la figure 6 le montre plus particulièrement, les talons 4 des supports 1 portent des goujons 45 qui pénètrent dans des berceaux 46 placés sur les rails inférieurs 47 de la file de magasinage et facilitent la manipulation lors de la pose des piles, permettant à coup sûr de poser les cadres aux intervalles voulus. Les talons ont d'ailleurs une forme en coin qui leur permet de reposer sur toute leur longueur lorsque les cadres ont une inclinaison de l'ordre de 6° sur la verticale.

A leur extrémité supérieure, les cadres s'appuient sur la table du pupitre 48, par l'intermédiaire d'entretoises 49, de même longueur que les talons 4, disposées contre cette table puis de proche en proche contre les éléments déjà montés, pour les supporter tour à tour à leur partie supérieure.

## Revendications

1. Procédé pour le transport et le magasinage de piles de feuilles de verre, en particulier de grands carreaux de verre très minces, selon lequel ces feuilles sont déposées sur un support rigide en L en une pile sur laquelle on assemble ensuite un couvercle rigide en L inversé pour l'enfermer dans le cadre ainsi constitué, que l'on transporte suspendu à un organe de levage, caractérisé en ce que ledit cadre fermé sert exclusivement au transport, l'organe de levage s'accrochant à son seul couvercle, et en ce qu'une fois la charge déposée dans les rayons du magasin en position légèrement inclinée, appuyée sur un pupitre par l'intermédiaire éventuel des supports précédents, le couvercle est séparé du support et ainsi rendu réutilisable pour le transport d'une autre pile.

2. Procédé selon la revendication 1, caractérisé en ce que l'on dépose la charge dans les rayons du magasin en la centrant à sa partie inférieure sur des organes montés à l'espacement voulu puisqu'on appuie sa partie supérieure, au même espacement, sur le support de la charge précédente, pour obtenir une inclinaison constante.

3. Dispositif de transport et de magasinage en position inclinée de piles de feuilles de verre, caractérisé en ce qu'il comporte en combinaison :
— une aire de magasinage possédant à une extrémité un pupitre d'appui (48),
— des supports rigides (1), en L, recevant des piles (40) de feuilles de verre,
— des entretoises (49) permettant d'espacer à distance uniforme les parties supérieures de deux supports successifs,
— des couvercles de transport rigides (2), en L inversé, munis chacun d'au moins une oreille de levage (36), de moyens d'assemblage (16, 28) à un support rigide en L et de moyens (41...) de serrage des feuilles.

4. Dispositif de transport et de magasinage de piles de feuilles de verre, selon la revendication 3, caractérisé en ce que les files de l'aire de stockage sont constituées de rails inférieurs (47) placés en face du pupitre d'appui, porteurs d'organes de centrage (46) montés à un espacement correspondant à la longueur des entretoises, pour recevoir les supports en L en appui les uns sur les autres selon l'inclinaison voulue.

## Claims

1. Method of transport and storage of stacks of glass sheets, particularly large panes of very thin glass, in which the sheets are placed on an L-shaped rigid support in a stack to which there is then applied a rigid cover of inverted L-shape to enclose it in the frame thus formed and the stack is transported suspended by a lifting member, characterised in that said closed frame is used exclusively for transport, the lifting member engaging only the cover, and in that when the load has been placed in the store in a slightly inclined position, supported on a stand optionally by means of said supports, the cover is separated from the support and thus made re-usable for transport of another stack.

2. Method according to claim 1, characterised in that the load is placed in the store while locating its lower part on members mounted at the desired spacing and its upper part is supported, at the same spacing, on the support of the preceding load, to obtain a constant inclination.

3. Device for transport and storage in an inclined position of stacks of glass sheets, characterised in that it comprises in combination :
— a storage area having at one end a support stand (48),
— rigid supports (1) of L shape receiving stacks (40) of glass sheets,
— spacers (49) allowing spacing at a uniform distance of the upper parts of two successive supports,
— rigid covers for transport (2) of inverted L shape, each provided with at least one lifting lug (36), means for assembly (16, 28) with the rigid support of L shape and means (41...) for clamping the sheets.

4. Device for transport and storage of stacks of glass sheets according to claim 3, characterised in that the rows for storage in the storage area comprise lower rails (47) placed facing the support stand, carrying locating members (46) mounted at a spacing corresponding to the length of the spacers, to receive the L-shaped supports supporting each other according to the desired inclination.

## Ansprüche

1. Verfahren für den Transport und die Lagerung von Glasscheibenpaketen, insbesondere von Paketen aus großen, sehr dünnen Glasscheiben, bei dem die Glasscheiben auf einem starren L-förmigen Grundrahmen in Form eines Stapels abgesetzt werden, mit dem ein starrer Schließrahmen in Form eines umgekehrten L verbunden wird, und der Glasscheibenstapel von dem so gebildeten Rahmengestell umgeben wird, das an einem Hebezeug hängend transportiert wird, dadurch gekennzeichnet, daß das geschlossene Rahmengestell ausschließlich für den Transport dient, daß das Hebezeug nur an dem Schließrahmen angreift, und daß nach dem Abstellen der Last auf dem Lagergestell in leicht geneigter Stellung und unter Abstützung gegen einen Stützrahmen, gegebenenfalls unter Zwischenschaltung der zuvor abgestellten Grundrahmen, der Schließrahmen von dem Grundrahmen getrennt wird und so für den Transport eines anderen Glasscheibenpakets verwendet werden kann.

2. Verfahren nach Anspruch 1, dadurch gekennzeichnet, daß die Last in dem Lagergestell mit ihrem unteren Teil auf in dem gewünschten Abstand angeordneten Organen zentriert abgesetzt, und zur Erzielung einer gleichbleibenden Neigung mit ihrem oberen Teil in dem gleichen Abstand gegen den Grundrahmen der zuvor abgestellten Last abgestützt wird.

3. Vorrichtung für den Transport und die Lagerung von Glasscheibenpaketen in geneigter Lage, gekennzeichnet durch folgende Kombination :

— einen Lagerplatz, der an einem Ende ein Stützgestell (48) aufweist ;

— starre Grundrahmen (1) in L-Form, die die Glasscheibenpakete (40) aufnehmen ;

— Distanzstücke (49) zur Sicherung eines einheitlichen Abstands zwischen den oberen Teilen zweier aufeinanderfolgender Grundrahmen, und

— starre Schließrahmen (2) mit umgekehrter L-Form für den Transport, die jeweils wenigstens eine Aufhängeöse (36), Verbindemittel (16, 28) für die Verbindung mit dem starren L-förmigen Grundrahmen und Mittel (41...) zum Festlegen der Glasscheiben aufweisen.

4. Vorrichtung für den Transport und die Lagerung von Glasscheibenpaketen nach Anspruch 3, dadurch gekennzeichnet, daß die Lagerreihen aus vor dem Stützgestell angeordneten unteren Schienen (47) bestehen, die Zentrierorgane (46) tragen, die in einem der Länge der Distanzstücke entsprechenden Abstand angeordnet sind, und die die L-förmigen Grundrahmen unter gegenseitiger Abstützung entsprechend der gewünschten Neigung aufnehmen.

_Fig. 1_

# 0 032 866

*Fig.2*

*Fig.3*

*Fig.4*

2

Fig. 5

Fig. 6